(19) Europäisches Patentamt
European Patent Office
Office européen des brevets

(11) **EP 3 172 011 B1**

(12) **FASCICULE DE BREVET EUROPEEN**

(45) Date de publication et mention
de la délivrance du brevet:
**01.09.2021 Bulletin 2021/35**

(21) Numéro de dépôt: **15756199.4**

(22) Date de dépôt: **23.07.2015**

(51) Int Cl.:
**B24B 9/14** *(2006.01)* **B24B 49/12** *(2006.01)*
**B24B 1/00** *(2006.01)* **G02C 13/00** *(2006.01)*

(86) Numéro de dépôt international:
**PCT/FR2015/052032**

(87) Numéro de publication internationale:
**WO 2016/012720 (28.01.2016 Gazette 2016/04)**

(54) **MACHINE D'ACQUISITION D'IMAGES DE LENTILLES OPTIQUES ET PROCÉDÉ DE DÉTOURAGE DE LENTILLES OPTIQUES**

MASCHINE ZUR ERFASSUNG VON BILDERN OPTISCHER LINSEN UND VERFAHREN ZUM BESÄUMEN VON OPTISCHEN LINSEN

MACHINE FOR ACQUIRING IMAGES OF OPTICAL LENSES AND PROCESS FOR TRIMMING OPTICAL LENSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2014 FR 1457240**

(43) Date de publication de la demande:
**31.05.2017 Bulletin 2017/22**

(73) Titulaire: **Essilor International**
**94220 Charenton-le-Pont (FR)**

(72) Inventeurs:
• **ANATOLE, Vincent**
**94220 Charenton-le-Pont (FR)**
• **SILEO, Cedric**
**78182 Saint Quentin en Yvelines (FR)**

(74) Mandataire: **Jacobacci Coralis Harle**
**32, rue de l'Arcade**
**75008 Paris (FR)**

(56) Documents cités:
EP-A2- 2 489 466          WO-A1-96/29177
WO-A2-2008/093332     FR-A1- 2 910 644
US-A- 5 428 448

• **None**

## Description

DOMAINE TECHNIQUE AUQUEL SE RAPPORTE L'INVENTION

La présente invention concerne de manière générale le détourage de lentilles optiques en vue de leur montage dans une monture de lunettes.

Elle concerne plus particulièrement une machine d'acquisition d'images de lentilles optiques.

Elle concerne également un procédé de détermination d'une consigne de détourage d'une lentille optique à détourer en vue de son montage dans une monture de lunettes dans laquelle est déjà montée une lentille optique de référence.

ARRIERE-PLAN TECHNOLOGIQUE

La partie technique du métier de l'opticien consiste à monter une paire de lentilles optiques sur une monture de lunettes sélectionnée par un porteur.

Ce montage se décompose en trois opérations principales :

- l'acquisition de la géométrie du contour intérieur de l'un des entourages de la monture de lunettes sélectionnée,
- le centrage de la lentille considérée qui consiste à positionner et à orienter convenablement ce contour sur la lentille de manière qu'une fois montée dans sa monture, cette lentille soit correctement positionnée par rapport à l'œil correspondant du porteur afin qu'elle puisse exercer au mieux la fonction optique pour laquelle elle a été conçue, puis
- le détourage de la lentille qui consiste à usiner son contour à la forme souhaitée.

L'opération de détourage consiste à éliminer la partie périphérique superflue de la lentille optique concernée, pour en ramener le contour, qui est le plus souvent initialement circulaire, à un contour de forme identique à celle du contour de l'entourage de la monture de lunettes ou de forme approchée.

La qualité de cette opération de détourage dépend en grande partie de la précision de l'opération d'acquisition de la forme du contour de l'entourage de la monture de lunettes.

Concrètement, lorsque la monture de lunettes est cerclée, cette opération d'acquisition consiste généralement, pour l'opticien, à palper le contour intérieur de l'entourage de la monture des lunettes sélectionnée afin de déterminer précisément les coordonnées de points caractérisant la forme du contour de cet entourage.

Afin de réaliser cette opération, l'opticien utilise un appareil de lecture de contour de drageoir tel que celui décrit dans le document EP 0819967 ou encore tel que celui décrit dans le document EP 1037008. Ces appareils comportent un palpeur qui est apte à pivoter autour d'un axe de rotation normal au plan moyen de la monture et qui comprend un doigt de palpage pointant selon un axe orthogonal à cet axe de rotation. Le doigt de palpage comporte en particulier une extrémité apte à s'insérer dans le drageoir de l'entourage afin de déterminer les coordonnées spatiales du contour de l'entourage.

L'objectif de cette opération est en particulier de suivre très exactement le fond du drageoir que comporte l'entourage de manière à pouvoir mémoriser une image numérique précise de la géométrie de la courbe longeant le fond du drageoir.

Lorsque la monture de lunettes est de type sans cercle (les lentilles étant alors percées), on utilise des gabarits (c'est-à-dire généralement les lentilles de référence fournies à l'opticien avec la monture de lunettes). Une acquisition optique permet alors de relever le contour de ces gabarits ainsi que la position des trous de perçage.

Dans le cas des montures cerclées, il arrive que le doigt de palpage s'échappe du drageoir lorsque la monture est fortement galbée, ce qui est notamment le cas des montures de lunettes solaire de sport.

Dans le cas des lentilles cambrées, l'acquisition d'images ne permet pas d'obtenir une précision suffisante pour acquérir des formes complexes des contours des gabarits, surtout si ces lentilles sont utilisées dans des montures cerclées ou semi-cerclées.

L'utilisation d'un objectif télécentrique pour acquérir l'image du gabarit permet de résoudre certains problèmes de précision liés à la courbure de la lentille, mais du fait de sa complexité, un tel objectif s'avère malheureusement onéreux.

On connaît également du document WO9629177 un dispositif de contrôle d'une lentille, comportant notamment un ordinateur, un support pneumatique qui est adapté à recevoir la lentille et qui est monté rotatif autour d'un axe, deux caméras, et un écran d'affichage. L'une des caméras est positionnée dans l'axe du support pneumatique tandis que l'autre est positionnée latéralement. Dans ce document, il est essentiellement prévu d'inspecter une lentille après qu'elle a été détourée, au cours d'un processus de fabrication de lentilles.

On connaît aussi du document WO2008093332 porte principalement sur la fabrication de lentilles solaires à clipser par-dessus des lentilles montées dans une monture de lunettes. Elle divulgue notamment un procédé consistant à déterminer des caractéristiques géométriques des lentilles montées dans la monture de lunettes, afin d'obtenir une consigne de détourage des lentilles solaires clipsables. Ce document n'enseigne toutefois pas de démonter les lentilles ophtalmiques montées dans la monture de lunettes. Dans ce document, il est ajouté qu'une autre application est la production de lunettes de correction ou de lunettes solaires sans cercle.

OBJET DE L'INVENTION

Afin de remédier aux inconvénients précités de l'état de la technique, la présente invention propose une méthode optique d'acquisition du contour de l'entourage de la monture de lunettes.

Plus particulièrement, on propose selon l'invention une machine d'acquisition d'images telle que définie dans la revendication 8.

Elle concerne également un procédé de détermination d'une consigne de détourage d'une lentille optique telle que définie dans la revendication 1.

La lentille optique de référence est une lentille qui se trouve initialement dans la monture de lunettes. En pratique, il s'agira généralement d'une lentille de démonstration, que l'opticien souhaitera remplacer par une lentille à détourer, cette lentille à détourer présentant par exemple des puissances optiques adaptées à l'acuité visuelle du futur porteur de lunettes.

Ainsi, grâce à l'invention, même dans le cas des montures de lunettes cerclées, on détermine la forme selon laquelle il faudra détourer cette lentille, non pas nécessairement à partir de la forme de l'entourage de la monture de lunettes, mais plutôt à partir de la forme de la lentille de référence initialement montée dans cette monture de lunettes.

Par conséquent, il est possible d'acquérir facilement au moins deux images de la lentille de démonstration, de manière à obtenir des données tridimensionnelles relatives à la forme de cette lentille de démonstration. Ces données tridimensionnelles permettront ensuite d'usiner la lentille à détourer avec une grande précision.

Ainsi, dans un mode de réalisation de l'invention, ces deux images pourront être prises l'une de face et l'autre de profil par un objectif non télécentrique, l'image de la lentille vue de profil permettant de déterminer le rayon de courbure de la lentille. Alors, grâce à ce rayon de courbure, il sera possible de déterminer la distance en tout point séparant la lentille et l'objectif non télécentrique, ce qui permettra de mettre à l'échelle l'image de la lentille vue de face.

D'autres caractéristiques avantageuses et non limitatives de la machine conforme à l'invention sont définies dans les revendications 9 à 14.

D'autres caractéristiques avantageuses et non limitatives du procédé conforme à l'invention sont définies dans les revendications 2 à 7..

A l'étape c) on recherche chaque trou de perçage de la lentille optique de référence, pour chaque trou de perçage trouvé, on sélectionne l'image sur laquelle les contours des débouchés avant et arrière dudit trou de perçage sont les plus proches, et au moins un paramètre de détourage est affecté à la caractérisation de la forme et de la position dudit trou de perçage sur l'image sélectionnée.

Autrement formulé, lorsque le trou de perçage est traversant, on recherche l'image sur laquelle l'ombre du trou de perçage considéré est la plus petite (ce qui signifie que sur cette image, les deux débouchés du trou se superposent presque voire complètement), et on caractérise le trou de perçage à partir des données relevées sur cette image.

Lorsque le trou de perçage ne débouche que d'un côté de la lentille (qu'il présente ou non une section circulaire), l'image pourra par exemple être sélectionnée manuellement par l'opticien, sur une image de la lentille vue de face afin d'en déterminer la position approchée.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique d'une machine d'acquisition d'images selon l'invention ;
- la figure 2 est une vue schématique en coupe d'un set de trois embouts de blocage appartenant à la machine d'acquisition d'images de la figure 1 ;
- la figure 3 est une vue schématique en perspective d'un gland de blocage adapté à être collé sur une lentille ;
- la figure 4 est une vue schématique en perspective d'une variante de réalisation du support de la machine d'acquisition d'images de la figure 1 ;
- la figure 5 est une vue schématique de côté illustrant l'acquisition de deux images d'une lentille au moyen de la machine d'acquisition d'images de la figure 1 ;
- la figure 6 représente une image vue de face d'une lentille optique ;
- la figure 7 est une vue d'une partie de la lentille optique de la figure 6, celle qui sera recouverte par la monture de lunettes ; et

- la figure 8 représente dix photos d'une lentille optique vue sous cinq angles différents, avec et sans monture de lunettes.

Il existe trois principales catégories de montures de lunettes. On distingue ainsi les montures de lunettes cerclées, les montures de lunettes semi-cerclées (également appelées montures à arcades) et les montures de lunettes sans cercle (également appelées montures percées).

Les montures de lunettes cerclées comportent classiquement deux entourages qui sont destinés à accueillir chacun une lentille optique détourée. Ces deux entourages sont reliés l'un à l'autre par un pontet et portent chacun une branche. Chaque entourage présente une rainure, communément appelée drageoir, qui court le long de sa face intérieure.

Lorsque la monture de lunettes est cerclée, la lentille optique doit être détourée de manière à présenter le long de sa tranche une nervure d'emboîtement, communément appelée biseau, dont la section présente généralement une forme en V. Le biseau ainsi formé sur la tranche de la lentille est alors adapté à venir s'emboîter dans le drageoir de la monture cerclée.

Les montures de lunettes semi-cerclées comportent deux arcades sur les faces intérieures desquelles s'étendent des nervures, ainsi que deux fils de maintien qui sont raccordés aux extrémités des arcades pour former avec celles-ci des contours fermés.

Lorsque la monture de lunettes est semi-cerclée, la lentille optique doit être détourée de manière à présenter en creux le long de sa tranche une rainure périphérique. La lentille est alors maintenue en place dans la monture de lunettes en emboîtant la partie supérieure de sa tranche dans la nervure prévue le long de la face interne de l'arcade correspondante, et en engageant le fil de maintien dans la rainure.

Enfin, les montures de lunettes sans-cercle comportent deux branches et un pontet, mais sont dépourvues d'entourage ou d'arcade. Ces branches et ce pontet sont en revanche dotés d'ergots adaptés à s'insérer dans des trous de perçage préalablement réalisés dans les lentilles optiques.

Lorsque la monture de lunettes est sans cercle, la lentille optique doit être détourée de manière à présenter une tranche dont la section est droite, puis être percée de manière à ce que l'on puisse y fixer solidement le pontet et la branche correspondante de la monture de lunettes.

Le métier de l'opticien est donc de monter une paire de lentilles neuves (on parle de « lentilles optiques à détourer ») sur la monture de lunettes sélectionnée par le porteur.

Il peut s'agir d'une monture de lunettes neuve, ou d'une monture de lunettes usagée (cas où le porteur de lunettes souhaite changer ses lentilles optiques tout en conservant sa monture de lunettes).

Dans le cas où elle est neuve, la monture de lunettes est généralement fournie à l'opticien avec des lentilles de présentation (ou gabarits) de puissances nulles.

Dans le cas où elle est usagée, la monture de lunettes est généralement fournie à l'opticien avec des lentilles optiques à remplacer.

Ces lentilles optiques qui se trouvent initialement dans la monture de lunettes (neuve ou usagée) seront dans la suite de cet exposé désignées par l'expression « lentilles de référence ».

Avant de détourer des lentilles optiques neuves afin de remplacer ces lentilles de référence, l'opticien doit mettre en œuvre une opération d'acquisition du contour selon lequel chaque lentille optique neuve devra être détourée.

Ici, cette acquisition sera opérée non pas nécessairement en fonction de la forme de la monture de lunettes, mais plutôt en fonction de la forme des lentilles de référence qui se trouvent initialement dans la monture de lunettes. De cette manière, le procédé utilisé s'appliquera aussi bien aux montures de lunettes cerclées, qu'aux montures de lunettes semi-cerclées et qu'aux montures de lunettes sans cercle.

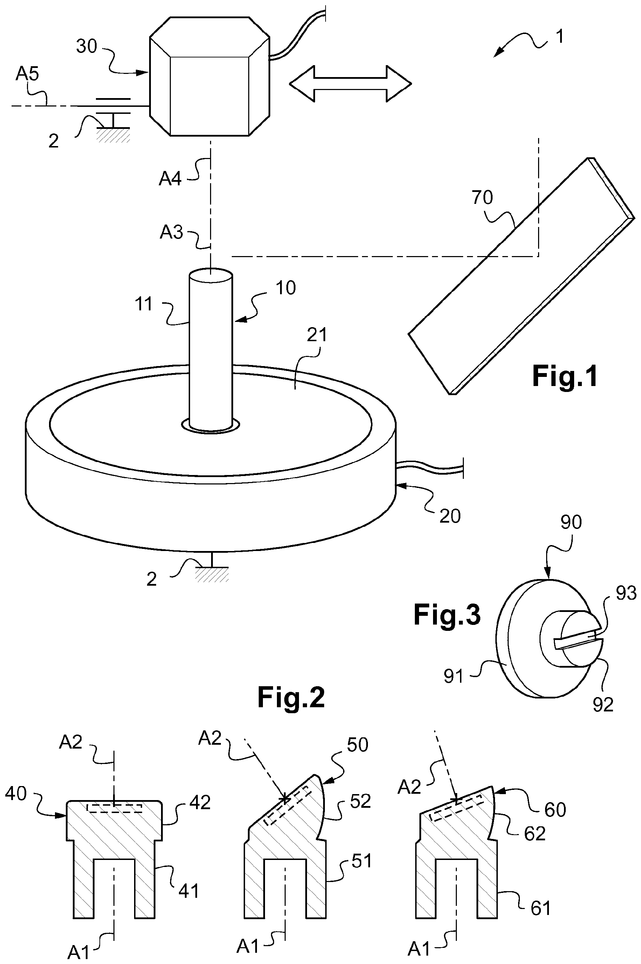

Comme le montre la figure 1, l'invention porte alors sur une machine d'acquisition d'images 1 permettant d'acquérir des images, vues sous des angles différents, d'une lentille de référence.

Cette machine d'acquisition d'images 1 comporte à cet effet :

- un châssis 2,
- un support 10 pour une lentille de référence,
- d'un côté du support 10, une source de lumière 20,
- d'un côté ou de l'autre côté du support 10, un capteur d'images 30 adapté à capturer au moins deux images de la lentille de référence vue sous deux angles différents.

Pour acquérir deux images de la lentille de référence sous deux angles différents, on pourra prévoir de monter le capteur d'images 30 de telle manière qu'il soit mobile par rapport au châssis 2 et/ou de monter la lentille de référence sur le support 10 de telle manière qu'elle soit mobile par rapport au châssis 2.

Dans le mode de réalisation de la machine d'acquisition d'images 1 représentée sur la figure 1, le support 10 comporte une tige 11 dont l'extrémité libre est adaptée à supporter un embout de blocage, cet embout de blocage étant prévu pour recevoir la lentille de référence.

Cette tige 11 est ici droite. Elle s'étend selon un axe principal A3, qui est en pratique vertical. Ici, cette tige 11 est fixée au support 2 par son extrémité basse.

La source de lumière 20 comporte ici un système d'éclairage direct 21, qui permet d'éclairer la lentille de référence par le dessous, c'est-à-dire à l'opposé du capteur d'images 30 par rapport à la lentille.

Ce système d'éclairage direct 21 comporte un plateau translucide en forme de disque, qui est traversé en son centre par la tige 11 de telle manière qu'il s'étend tout autour de la tige 11.

Différentes sources lumineuses, telles que des diodes électroluminescentes, permettent d'éclairer par le dessous ce plateau translucide, de telle manière qu'il forme une source de lumière étendue.

En variante, on pourra prévoir de compléter ou de remplacer ce système d'éclairage direct 21 par un système d'éclairage latéral (non représenté) éclairant la lentille de référence par sa tranche. Ce système d'éclairage latéral pourra être placé sur le côté de la tige 11, à hauteur du dessus ou du dessous de l'extrémité libre de cette tige 11, de manière à éclairer la lentille de référence portée par cette tige 11.

Le capteur d'images 30 est quant à lui formé par une caméra numérique.

Cette caméra numérique ne comporte pas un objectif télécentrique. L'utilisation d'un objectif télécentrique permettrait de conserver un même rapport de grossissement de la lentille quelle que soit la distance de prise de vue. Malheureusement, un tel objectif est très complexe à fabriquer.

C'est la raison pour laquelle selon l'invention, l'objectif choisi est ici non télécentrique (il s'agit donc d'un objectif entocentrique).

Ici, on se propose alors, comme cela sera bien décrit dans la suite de cet exposé, de traiter les images acquises de manière à tenir compte des changements d'échelles dues aux variations de distances de prise de vue, de manière à obtenir de résultats aussi précis que ceux qu'on obtiendrait en utilisant un objectif télécentrique.

Le capteur d'images 30 est ici monté sur le châssis 2 de telle manière que son axe optique A4 reste parallèle à l'axe principal A3 de la tige 11 du support 10.

Il est plus précisément ici monté mobile sur le châssis 2 de telle sorte qu'il peut acquérir non seulement une image de face de la lentille de référence, mais également une image de côté de cette lentille, sans qu'il soit nécessaire pour cela de bouger la lentille de référence.

Pour cela, le capteur d'images 30 est monté sur le châssis 2 avec une mobilité de translation suivant un axe A5 perpendiculaire à son axe optique A4. Il est ainsi mobile entre une position de base dans laquelle son axe optique A4 est confondu avec l'axe principal A3 de la tige 11, et une position escamotée dans laquelle son axe optique A4 est strictement parallèle à l'axe principal A3.

Il est en outre ici prévu un miroir 70 qui permet, lorsque le capteur d'images 30 est en position escamotée, de réfléchir une image du côté de la lentille de référence vers ce capteur d'images 30.

Ce miroir 70 s'étend à cet effet dans un plan dont la normale au centre du miroir coupe l'axe principal A3 avec un angle d'inclinaison de 45 degrés.

Ce miroir 70 est ainsi positionné de telle manière que, lorsque le capteur d'images 30 est en position escamotée, le miroir 70 se trouve dans le champ du capteur d'images.

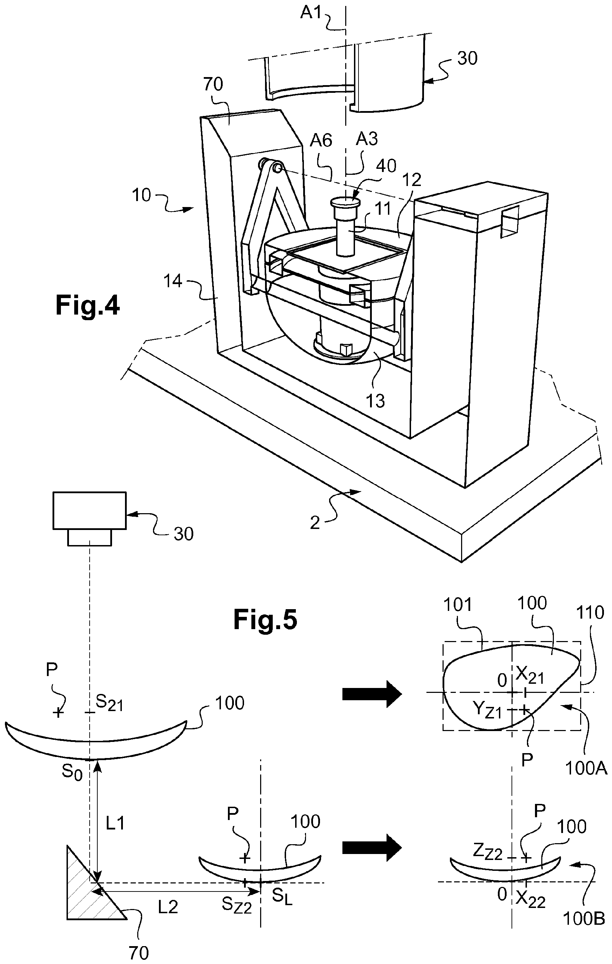

Comme le montre la figure 5, la mobilité du capteur d'images 30 et l'utilisation du miroir 70 permettent donc d'acquérir deux images 100A, 100B de la lentille de référence 100, vue sous deux angles différents. Ces deux images seront, dans la suite de cet exposé, appelées image de face 100A et image de côté 100B.

En variante, on pourrait prévoir que le capteur d'images reste immobile, et que le miroir soit mobile pour se placer dans le champ du capteur d'images afin de renvoyer vers celui-ci une image de côté de la lentille (via par exemple d'autres miroirs).

Dans la présente invention, lorsque la lentille de référence est percée, on souhaite acquérir au moins une autre image de la lentille de référence, vue sous un autre angle.

En effet, les seules vues de face et de côté de la lentille ne permettent pas de caractériser précisément les formes et positions des trous de perçage prévus dans la lentille de référence.

Pour cela, la présente invention propose d'acquérir d'autres images, sur lesquelles les trous de perçages sont sensiblement situés dans l'axe du capteur d'images 30.

Sur la figure 3, on a représenté un gland de blocage 90. Un tel gland de blocage comporte un plateau 91 revêtu d'un autocollant double-face à coller sur la lentille. Il comporte également un pion 92 cylindrique de révolution, qui est prévu pour être facilement saisi en vue de faciliter la préhension de la lentille.

Sur cette figure 3, on observe que le pion 92 présente une rainure 93 en creux dans sa face d'extrémité, qui s'étend selon le diamètre de ce pion et qui fournit une indication de l'orientation de la lentille autour de l'axe du pion 92.

Comme le montre la figure 2, la machine d'acquisition d'images 1 est alors équipée d'un set d'au moins deux embouts de blocage différents.

Il est ici prévu trois embouts de blocage 40, 50, 60.

Chaque embout de blocage 40, 50, 60 comporte :

- une partie de préhension 41, 51, 61 pour sa fixation sur la tige 11 selon un premier axe A1, et
- une partie d'accueil 42, 52, 62 pour sa fixation au gland de blocage 90 selon un second axe A2, l'angle d'inclinaison entre le premier axe A1 et le second axe A2 variant d'un embout de blocage 40, 50, 60 à l'autre.

Ici, les parties de préhension 41, 51, 61 des trois embouts de blocage 40, 50, 60 sont identiques. Elles sont prévues pour se fixer à la tige 11 par emboîtement. Elles se présentent alors sous la forme de manchons symétriques de révolution autour du premier axe A1. Ces manchons présentent des diamètres intérieurs identiques (au jeu de montage près) au diamètre extérieur de la tige 11, ce qui leur assure une bonne stabilité sur l'extrémité libre de la tige 11.

Les parties d'accueil 42, 52, 62 des trois embouts de blocage 40, 50, 60 sont quant à elles prévues pour se fixer au pion 92 du gland de blocage 90. Elle comportent à cet effet chacune une cavité permettant de loger le pion 92.

Comme cela apparaît en pointillés sur la figure 2, la cavité prévue en creux dans chaque partie d'accueil 42, 52, 62 est traversée par une nervure qui est prévue pour se loger dans la rainure 93 du pion 92. De cette manière, on s'assure que l'orientation de la lentille autour de l'axe A3 de la tige 11 ne change pas lorsqu'on positionne successivement la lentille sur les trois embouts de blocage 40, 50, 60.

Ici, les faces supérieures de ces parties d'accueil 42, 52, 62 présentent des formes identiques, mais elles sont orientées différemment par rapport aux parties de préhension 41, 51, 61.

L'axe de symétrie de la partie d'accueil 42, 52, 62 de chaque embout (appelé ici second axe A2) présente une inclinaison par rapport au premier axe A1 qui diffère d'un embout à l'autre.

Dans l'exemple représenté sur la figure 2, l'angle d'inclinaison entre le premier axe A1 et le second axe A2 est égal à 0 degré pour le premier embout de blocage 40, à 30 degrés pour le second embout de blocage 50, et à 15 degrés pour le troisième embout de blocage 60.

De cette manière, en fixant successivement la lentille de référence à la tige 11 au moyen de ces embouts de blocage 40, 50, 60, il est possible d'acquérir des images de la lentille de référence avec différents angles d'inclinaison.

En changeant d'embout de blocage, le risque est alors de perdre le référentiel de la lentille de référence entre les différentes acquisitions d'images.

Pour éviter cela, comme le montre la figure 2, les embouts de blocage 40, 50, 60 sont fabriqués de telle sorte que le point d'intersection entre les premier et second axes A1, A2 soit toujours situé à la même position par rapport à la partie de préhension 41, 51, 61 de l'embout de blocage.

De cette manière, en plaçant à chaque fois le centre boxing de la lentille de référence au niveau de ce point d'intersection, on s'assure de bien conserver le référentiel de la lentille de référence (ce référentiel étant ensuite conservé pour l'usinage de la lentille).

En l'espèce, ce point d'intersection sera situé à une distance donnée de la face supérieure de la partie d'accueil 42, 52, 62, cette distance correspondant à l'épaisseur du plateau 91 du gland de blocage 90 et de l'autocollant double-face utilisé.

Comme le montre la figure 5, on définira ici le cadre boxing 110 de la lentille de référence 100 comme étant le rectangle qui circonscrit le contour 101 de l'image 100A de la lentille de référence 100 vue de face, et dont deux des côtés sont parallèles à la ligne d'horizon de la lentille. On définira alors le centre boxing de la lentille de référence comme le point qui est situé au centre du cadre boxing 110, sur la face avant de cette lentille de référence 100.

Ici, les embouts de blocage 40, 50, 60 seront fabriqués soit à la demande, au moyen d'une imprimante 3D ou de toute autre technique adaptée (prototypage rapide, ...), soit en série par moulage d'une matière plastique.

Selon une variante de l'invention représentée sur la figure 4, on pourra prévoir d'utiliser un seul et même embout de blocage 40 pour fixer la lentille de référence, auquel cas le support 10 devra être monté mobile par rapport au châssis 2 de manière à pouvoir acquérir des images inclinées de la lentille de référence.

Le support 10 sera préférentiellement monté mobile par rapport au châssis 2 avec au moins deux mobilités de rotation autour de deux axes distincts, et deux mobilités de translation selon deux axes distincts.

Dans cette variante, la tige 11 n'est pas fixée au châssis 2 de la machine d'acquisition d'images 1, mais elle est montée sur le châssis 2 avec deux mobilités de rotation autour de deux axes A6, A7 non parallèles.

Cette tige 11 est ainsi montée mobile en rotation autour d'un premier axe A6 qui est perpendiculaire à l'axe principal A3 de la tige 11. Ce premier axe A6 est en pratique horizontal.

La tige 11 est en outre montée mobile en rotation autour d'un second axe A7 qui est perpendiculaire au premier axe A6. Ce second axe A7 est en pratique confondu avec l'axe principal A3.

Pour lui conférer ces deux mobilités, la tige 11 s'élève à partir d'un plateau 12, qui est monté mobile en rotation (autour de l'axe principal A3) sur un socle 13, ce socle 13 étant lui-même monté mobile en rotation (autour du premier axe A6) sur une embase 14 posée sur le châssis 2.

Ici, l'embase 14 présente une forme en U, avec une partie inférieure plane qui repose sur le châssis 2, et deux montants latéraux qui s'élèvent au-dessus du châssis 2.

Le socle 13 est alors relié à cette embase 14 par deux arches latérales en formes de V renversés, dont les extrémités sont fixées au socle 13 et dont les sommets portent des ergots montés pivotants dans deux paliers lisses de l'embase 14.

Le montage des ergots dans les paliers lisses de l'embase 14 est serré de telle sorte que, d'une part, l'opticien peut faire manuellement basculer le socle 13 autour du premier axe A6, et que, d'autre part, une fois basculé, le socle 13 reste en position inclinée et ne revient pas naturellement en position initiale.

Le plateau 12 comporte pour sa part une assise circulaire qui repose sur la face supérieure du socle 13. Il est prévu, en creux dans la face supérieure du socle 13 et dans l'assise circulaire du plateau 12, des gorges annulaires en regard qui permettent d'accueillir un anneau de guidage de la rotation du plateau 12 autour de l'axe principal A3.

De cette manière, en réglant la position angulaire du plateau 12 autour de l'axe principal A3 et celle du socle 13 autour du premier axe A6, il est possible de faire basculer la lentille de référence fixée à l'accessoire de blocage 40 dans une position inclinée par rapport à l'axe optique A4 du capteur d'images 30, afin d'acquérir des images inclinées de la lentille de référence.

Il est également possible de déplacer l'embase 14 en la faisant glisser sur le châssis 2, de manière à pouvoir placer l'axe de la tige 11 dans l'axe optique A4 du capteur d'images 30, ou à distance de celui-ci.

En variante, on pourrait prévoir d'utiliser des moteurs électriques pour actionner automatiquement les mobilités du support 10 par rapport au châssis 2. Ici encore, pour éviter tout problème de changement de référentiel lors du pivotement du socle 13 autour du premier axe A6, le support 10 est conçu de telle manière que le point d'intersection du premier axe A6 et de l'axe principal A3 est situé à une distance donnée de la face supérieure de la partie d'accueil 42 de l'accessoire de blocage 40, cette distance correspondant à l'épaisseur du plateau 91 du gland de blocage 90 et de l'autocollant double-face utilisé.

On notera par ailleurs sur la figure 4 que dans cette variante, le miroir 70 est fixé à l'extrémité de l'un des montants de l'embase 14.

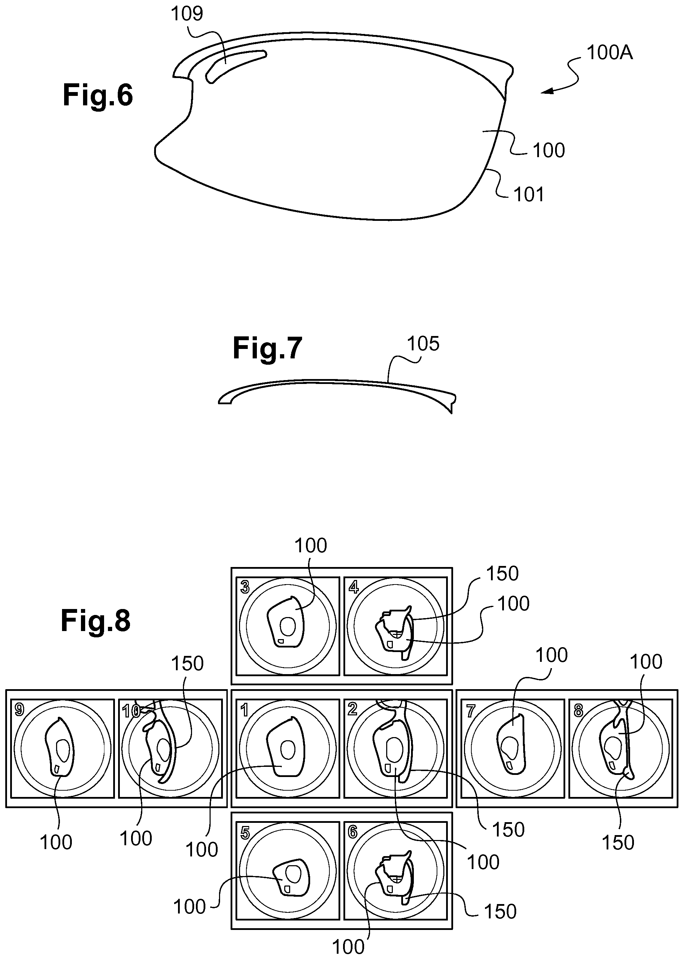

Sur les photos 3, 5, 7 et 9 de la figure 8, on a représenté quatre images inclinées de la lentille de référence 100 nue (c'est-à-dire démontée de la monture de lunettes), acquises à l'aide de la machine d'acquisition d'images 1. Sur la photo 1 de cette figure 8, on a représenté une image de face de la lentille de référence 100 nue.

Sur les autres photos, on a représenté des images correspondantes de cette lentille de référence 100 (vue de face, de côté, et inclinée), lorsqu'elle est montée dans sa monture de lunettes 150.

Pour piloter les différents organes de la machine d'acquisition d'images 1, il est prévu un calculateur (non représenté) comportant un processeur, une mémoire vive (RAM), une mémoire morte (ROM), des convertisseurs analogiques-numériques, et différentes interfaces d'entrée et de sortie.

Grâce à ses interfaces d'entrée, le calculateur est adapté à recevoir de différentes interfaces homme/machine (écran tactile, bouton, ...) des signaux d'entrée relatifs à la volonté de l'opticien. L'opticien peut ainsi commander l'allumage de la source d'éclairage 20, l'acquisition d'une image par le capteur d'images 30, le traitement des images acquises, la mise en marche des moteurs électriques, ...

Dans sa mémoire vive, le calculateur mémorise les différentes images acquises de la lentille de référence.

Dans sa mémoire morte, le calculateur mémorise un logiciel de traitement des images acquises, qui permet de générer des paramètres de détourage d'une lentille neuve.

Enfin, grâce à ses interfaces de sortie, le calculateur est adapté à transmettre ces paramètres de détourage à au moins une machine de détourage de lentilles optiques.

Pour élaborer une consigne de détourage d'une lentille neuve, on procède alors en plusieurs étapes. Les étapes principales de ce procédé sont les suivantes :

a) une étape de démontage de la lentille de référence 100 et de fixation de cette lentille de référence 100 sur le support 10 de la machine d'acquisition d'images 1,
b) une étape d'acquisition, par le capteur d'images 30, d'au moins deux images de la lentille de référence 100 vue sous deux angles différents,
c) une étape de traitement des images acquises pour en déduire des paramètres de détourage de ladite lentille neuve, et
d) une étape d'élaboration de la consigne de détourage en fonction desdits paramètres de détourage.

A ce stade, on précisera que la consigne de détourage est généralement élaborée par la machine de détourage elle-même, à partir de différents paramètres de détourage. En effet, la consigne de détourage va être élaborée en fonction de la cinématique de la machine de détourage concernée, si bien qu'elle ne peut généralement pas être élaborée en amont.

On peut exposer en détail la mise en œuvre des étapes a) à c) du procédé précité. L'étape d), bien connue de l'homme du métier, ne sera en revanche pas ici décrite en détail.

A l'étape a), l'opticien démonte l'une des deux lentilles de référence 100 de la monture de lunettes 150, de manière à pouvoir acquérir des images de la lentille de référence 100 nue, sur lesquelles apparait l'ensemble du contour de cette lentille de référence 100.

Ici, on considérera que l'opticien dispose d'une machine d'acquisition d'images 1 comportant un support 10 du type de celui représenté sur la figure 4. Bien entendu, la mise en œuvre du procédé serait sensiblement la même avec un support 10 du type de celui représenté sur la figure 1.

Après avoir extrait la lentille de référence 100 de sa monture, l'opticien fixe le gland de blocage 90 sur la lentille de référence 100 au moyen d'un autocollant double-face, en prenant soin que l'axe du pion 92 passe par le centre boxing de la lentille de référence 100. Des marquages prévus sur la lentille et sur le gland de blocage 90 pour identifier le centre boxing et l'axe du pion 92 permettent de faciliter cette opération.

L'opticien peut en variante s'aider d'un dispositif centreur-bloqueur dont l'utilisation est bien connue par ailleurs et permet d'obtenir des résultats plus précis.

Selon une autre variante, l'opticien pourrait utiliser un gland de blocage pneumatique, se présentant sous la forme d'une ventouse à rapporter sur la lentille et à fixer à cette dernière au moyen d'une pompe à vide.

Ici, l'opticien rapporte ensuite le gland de blocage 90 muni de la lentille de référence 100 sur l'accessoire de blocage 40 fixé à l'extrémité de la tige 11.

Il place ensuite le berceau 12 du support 10 dans une position initiale droite (dans laquelle l'axe principal A3 de la tige 11 se confond avec le second axe A7).

Alors, la machine d'acquisition d'images 1 est prête à acquérir des images de la lentille de référence 100.

A l'étape b), l'opticien commande l'acquisition d'images de la lentille de référence 100, via un moyen de saisie quelconque équipant la machine d'acquisition d'images 1 (clavier, écran tactile, ...).

Lors de cette étape, le capteur d'images 30 est commandé pour acquérir une image de face 100A de la lentille de référence 100 (voir figure 5).

Le calculateur commande ensuite le déplacement du capteur d'images 30 depuis sa position de base vers sa position escamotée, via par exemple un système de pignon-crémaillère commandé par un moteur électrique. Le calculateur commande ensuite l'acquisition d'une image de côté 100B de la lentille de référence 100.

Le calculateur commande ensuite le retour du capteur d'images 30 en position de base.

Lorsque la lentille de référence 100 présente des trous de perçage, l'opticien incline alors manuellement le berceau 12 du support 10 de telle manière que l'un des trous de perçage se trouve positionné sensiblement verticalement. Il commande ensuite l'acquisition d'une nouvelle image inclinée de la lentille. Il procède de la même manière pour tous les autres trous de perçage.

En variante, lorsque l'inclinaison du berceau est commandée par un moteur électrique, la consigne d'inclinaison envoyée au moteur électrique peut être calculée automatiquement par le calculateur.

Elle peut en particulier être calculée en fonction de la forme du trou de perçage sur l'image de face (sur cette image de face, le trou présente une forme oblongue et non circulaire). En effet, il est possible de déterminer sur cette image de face l'orientation du trou de perçage, et d'en déduire une consigne d'inclinaison à envoyer aux moteurs électriques.

Ainsi, à ce stade, si la lentille de référence 100 ne présente pas de trou de perçage, la mémoire vive du calculateur mémorise au moins deux images de la lentille de référence 100 vue de face (c'est-à-dire vue de la face avant) et vue de dos (c'est-à-dire vue de la face arrière). En revanche, si la lentille de référence 100 présente par exemple quatre trous de perçage, la mémoire vive du calculateur mémorise six images de la lentille de référence 100.

Une fois ces images acquises, l'opticien remonte la monture de lunettes 150 sur la lentille de référence 100, alors que cette dernière est encore montée sur la tige 11.

Comme cela apparaît sur la figure 8, il peut ainsi acquérir d'autres images de la lentille de référence 100 montée dans sa monture de lunettes 150.

En pratique, l'opticien commande l'acquisition de deux autres images : une image de face et une image de côté de la lentille de référence 100 montée dans sa monture de lunettes 150.

Enfin, l'opticien commande le démarrage du traitement des images acquises par le calculateur.

Puisque les images ont été acquises à l'aide d'un objectif non télécentrique, la première opération de traitement consiste à redimensionner les images mémorisées.

En effet, dans ce cas, la distance entre l'objectif et la lentille de référence 100 varie d'un point à l'autre de la lentille, ce qui génère une distorsion de l'image acquise qu'il convient de corriger afin d'obtenir des résultats de mesure fiables.

Dans le cas où l'objectif utilisé serait télécentrique (ce qui n'est pas le cas dans l'invention), cette première opération serait inutile.

Ici, cette première opération consiste alors à corriger les coordonnées de chaque point caractéristique de l'image acquise.

Le préalable de cette opération est de déterminer la courbure de la lentille de référence 100, cette courbure permettant ensuite de déterminer la distance séparant le capteur d'images 30 de la lentille de référence 100, ce qui permettra de remettre chaque image à l'échelle.

Pour déterminer cette courbure, on pourra acquérir le rayon de courbure de la face avant convexe de la lentille de référence 100 soit en la lisant dans une base de données, soit en la mesurant à l'aide d'un appareil adapté, soit en la calculant sur l'image de la lentille de profil.

En effet, comme le montre la figure 5, en détectant la forme du contour de la lentille de référence vue de côté, le calculateur peut déterminer le rayon de courbure de la face avant convexe de la lentille de référence 100 (qui est considérée comme présentant une forme de calotte sphérique).

Ensuite, pour bien comprendre comment le calculateur opère l'opération de mise à l'échelle des images acquises, on peut s'intéresser à un point P repérable sur l'image de face 100A et sur l'image de côté 100B de la lentille de référence 100 (voir figure 5).

On cherche alors à déterminer les coordonnées tridimensionnelles $X_{mm}$, $Y_{mm}$, $Z_{mm}$ de ce point P, exprimées en millimètres, alors qu'on ne dispose que des coordonnées bidimensionnelles $(X_{Z1}, Y_{Z1})$ et $(X_{Z2}, Z_{Z2})$ de ce point P, relevées en pixels sur les deux images 100A, 100B.

On peut écrire le système de six équations suivantes :

$X_{mm} = X_{Z1} * S_{Z1}$, avec $S_{Z1}$ la hauteur du point P par rapport au centre boxing (qui est déduit de la courbure de la lentille),

$$Y_{mm} = Y_{Z1} * S_{Z1},$$

$S_{Z1} = a * Z_{mm} + S_0$, a et $S_0$ étant deux constantes connues (déterminées lors de la calibration de la machine d'acquisition d'images 1),

$X_{mm} = X_{Z2} * S_{Z2}$, avec $S_{Z2}$ l'écart horizontal entre le point P et le centre boxing (qui est déduit de la courbure de la lentille),

$$Z_{mm} = Z_{Z2} * S_{Z2},$$

$S_{Z2} = a * (Y_{mm} - (L1+L2)) + S_0$, L1 et L2 étant deux constantes connues (déterminées lors de la calibration de la machine d'acquisition d'images 1).

En pratique, seul le résultat de la résolution de ce système d'équation est mémorisé dans la mémoire morte du calculateur. Ce résultat est le suivant :

$$Y_{mm} = [1 / (1 - Y_{Z1} * a^2 * Z_{Z2})] * [Y_{Z1} * S_0 * (1 + a * Z_{Z2}) - Y_{Z1} * a^2 * Z_{Z2} * (L1 + L2)]$$

$$Z_{mm} = Z_{Z2} * (a * (Y_{mm} - (L1+L2)) + S_0)$$

$$X_{mm} = X_{Z1} * (a * Z_{mm} + S_0).$$

En appliquant ce résultat à tous les points caractéristiques de l'image, le calculateur peut alors redimensionner les images acquises de façon à obtenir des résultats non déformés malgré l'utilisation d'un objectif non télécentrique.

Une fois les images acquises redimensionnées, la seconde opération consiste à traiter les images de la lentille de référence 100 nue.

La première des images traitées est l'image vue de face 100A.

On a par exemple représenté sur la figure 6 une telle image vue de face 100A, acquise par le capteur d'images 30 et redimensionnée par le calculateur.

Afin d'obtenir des paramètres de détourage à transmettre à une machine de détourage, le calculateur va examiner le contour 101 de l'image vue de face 100A de la lentille de référence 100, il va déterminer la ou les zones de la lentille qui vont être recouvertes par la monture de lunettes, et il va caractériser le ou les trous de perçage prévus dans la lentille de référence 100.

Sur l'image vue de face 100A, le contour 101 de la lentille de référence 100 présente des zones convexes et deux zones concaves localisées. Ce contour 101 est alors caractérisé par une pluralité de points qui s'étendent le long de son pourtour, et qui sont régulièrement répartis sur celui-ci. Les coordonnées bidimensionnelles de ces points formeront des premiers paramètres de détourage à transmettre à la machine de détourage.

Le calculateur va ensuite traiter en combinaison les images vues de face de la lentille de référence 100 nue et de la lentille de référence 100 montée dans sa monture de lunettes 150.

Il va ainsi pouvoir déterminer la zone située à l'intérieur du contour 101 qui correspond à la zone de la lentille de référence 100 qui est recouverte par la monture de lunettes 150. Cette zone 105 est représentée sur la figure 7.

Pour cela, en repérant la position du contour de la monture de lunettes 150, le calculateur va reporter ce contour sur l'image vue de face 100A de la lentille de référence 100 nue, et ainsi caractériser cette zone 105.

Il va ainsi pouvoir déterminer la ou les zones de conflits situées à l'intérieur du contour 101 qui correspondent aux endroits où la lentille neuve risquera d'interférer avec la monture de lunettes 150 et créer des collisions par exemple avec les plaquettes nasales ou les bords avant et/ou arrières de la monture. En effet, contrairement à la lentille de référence 100 qui présente généralement une épaisseur réduite, la lentille neuve pourra présenter une importante épaisseur au bord, ce qui pourrait générer un conflit entre la lentille neuve et la monture de lunettes 150.

En déterminant la forme tridimensionnelle d'une partie de la monture de lunettes 150 à l'aide des images vues de face et de côté acquises, le calculateur pourra alors déterminer si un tel conflit risque d'arriver, et si tel est le cas, il pourra déterminer des seconds paramètres de détourage, visant à créer un biseau incliné dans les zones de conflit avec les plaquettes nasale et/ou à permettre d'usiner un épaulement (ou un renfoncement) dans la tranche de la lentille neuve comme précisé dans le brevet US7643899. Un tel usinage permettra ainsi d'éviter tout problème de montage de la lentille neuve dans la monture de lunettes 150.

Le calculateur va ensuite traiter l'image vue de face 100A de la lentille ophtalmique 100 nue afin de déterminer si cette lentille présente un ou plusieurs trous de perçage.

Si tel est le cas, le calculateur va sélectionner, parmi les différentes images acquises de la lentille de référence nue, celle sur laquelle les contours des débouchés avant et arrière du trou de perçage considéré sont les plus proches. Cette image correspondra à celle pour laquelle le trou de perçage était orienté sensiblement dans l'axe du capteur d'images 30.

Alors, sur cette image, le calculateur 100 va calculer la forme et la position de ce trou de perçage. La forme et la position de chaque trou de perçage formeront des troisièmes paramètres de détourage.

Après avoir caractérisé l'ensemble des trous de perçage situés dans la lentille de référence 100, le calculateur traite l'image vue de côté 100B de la lentille de référence 100.

La présente invention n'est nullement limitée au mode de réalisation décrit et représenté, mais l'homme du métier saura y apporter toute variante conforme aux limitations telles que définies par les revendications.

On pourrait par exemple prévoir que le support de lentille soit immobile et que le capteur d'images soit monté mobile en rotation sur le châssis de la machine d'acquisition d'images, autour d'un axe passant par le centre boxing de la lentille de référence. De cette manière, ce capteur d'images pourra acquérir une image de face de la lentille de référence, puis il pourra pivoter afin d'acquérir des images inclinées et de côté de la lentille de référence, sans qu'il soit nécessaire de déplacer la lentille de référence.

## Revendications

1. Procédé de détermination d'une consigne de détourage d'une lentille optique à détourer en vue de son montage dans une monture de lunettes (150) dans laquelle est montée au moins une lentille optique de référence (100), comprenant des étapes:

   a) de démontage de ladite lentille optique de référence (100) et de fixation de ladite lentille optique de référence (100) sur un support (10) d'une machine d'acquisition d'images (1),
   b) d'acquisition, par un capteur d'images (30) de ladite machine d'acquisition d'images (1) comportant un objectif entocentrique, d'au moins deux images de ladite lentille optique de référence (100) vue sous deux angles différents,
   c) de traitement desdites au moins deux images pour en déduire des paramètres de détourage de ladite lentille optique à détourer, et
   d) d'élaboration de ladite consigne de détourage en fonction desdits paramètres de détourage,

   dans lequel à l'étape c), on acquiert la courbure de l'une des faces de ladite lentille optique de référence (100), et on met chaque image acquise à l'échelle en fonction de ladite courbure.

2. Procédé de détermination selon la revendication 1, dans lequel, à l'étape b), lesdites au moins deux images sont acquises successivement, un miroir (70) étant placé sur le chemin optique du capteur d'images (30) entre les deux acquisitions d'images.

3. Procédé de détermination selon l'une des revendications 1 et 2, dans lequel, à l'étape b), lesdites au moins deux images sont acquises successivement, en inclinant, entre les deux acquisitions d'images, ladite lentille optique de référence (100) par rapport au capteur d'images (30) d'un angle connu autour d'un axe de rotation qui passe par le centre boxing de la lentille optique de référence (100).

4. Procédé de détermination selon l'une des revendications 1 à 3, dans lequel, à l'étape b), on acquiert également au moins une image de la lentille optique de référence (100) montée dans la monture de lunettes (150), et à l'étape c), on traite ladite image pour en déduire au moins un desdits paramètres de détourage.

5. Procédé de détermination selon l'une des revendications 1 à 4, dans lequel, à l'étape b), l'une des deux images de la lentille optique de référence (100) est acquise de côté, de telle sorte que la lentille optique de référence (100) s'étend dans un plan moyen sensiblement parallèle à un axe du chemin optique dudit capteur d'images (30) et, à l'étape c), on détermine le rayon de courbure de l'une des faces optiques de la lentille optique de référence (100).

6. Procédé de détermination selon l'une des revendications 1 à 5, dans lequel, à l'étape b), l'une des deux images de la lentille optique de référence (100) est acquise de face, de telle sorte que la lentille optique de référence s'étend dans un plan moyen sensiblement orthogonal à un axe du chemin optique dudit capteur d'images (30) et, à l'étape c), on relève sur l'image acquise de face la forme bidimensionnelle du contour (101) de la lentille optique de référence (100).

7. Procédé de détermination selon l'une des revendications 1 à 6, dans lequel, à l'étape c) :

   - on recherche chaque trou de perçage de la lentille optique de référence (100),
   - pour chaque trou de perçage trouvé, on sélectionne l'image sur laquelle les contours des débouchés avant et arrière dudit trou de perçage sont les plus proches, et
   - au moins un paramètre de détourage est affecté à la caractérisation de la forme et de la position dudit trou de perçage sur l'image sélectionnée.

8. Machine d'acquisition d'images (1) de lentilles optiques, comportant :

   - un support (10) pour une lentille optique de référence (100),
   - une source de lumière (20),
   - un capteur d'images (30) comportant un objectif entocentrique et qui est adapté à capturer une première image de la lentille optique de référence (100) portée par le support (10), vue sous un premier angle, et une seconde image de la lentille optique de référence (100) portée par le support (10), vue sous un second angle distinct du premier angle,

   **caractérisée en ce qu'**elle comporte un calculateur qui mémorise un logiciel de traitement adapté à mettre en œuvre les étapes c) et d) d'un procédé de détermination conforme à l'une des revendications précédentes.

9. Machine d'acquisition d'images (1) selon la revendication 8, dans laquelle ledit capteur d'images (30) et ladite source de lumière (20) sont disposés de part et d'autre de la lentille optique de référence (100) portée par le support (10).

10. Machine d'acquisition d'images (1) selon la revendication 8, dans laquelle ledit capteur d'images (30) et ladite source de lumière (20) sont disposés d'un même côté de la lentille optique de référence (100) portée par le support (10).

11. Machine d'acquisition d'images (1) selon l'une des revendications 8 à 10, dans laquelle ledit support (10) comprend une embase (11) et un set d'au moins deux embouts de blocage (40, 50, 60), chaque embout de blocage (40, 50, 60) comportant :

   - une partie de préhension (41, 51, 61) pour sa fixation sur ladite embase (11) selon un premier axe (A1), et
   - une partie d'accueil (42, 52, 62) pour sa fixation à ladite lentille optique de référence (100) selon un second axe (A2), l'angle d'inclinaison entre le premier axe (A1) et le second axe (A2) variant d'un embout de blocage (40, 50, 60) à l'autre.

12. Machine d'acquisition d'images (1) selon l'une des revendications 8 à 10, dans laquelle il est prévu un châssis (2) et dans laquelle le support (10) comporte un embout de blocage (40) pour la fixation de ladite lentille optique de référence (100), qui est monté mobile par rapport au châssis (2) avec au moins deux mobilités de rotation autour de deux axes (A6, A7) non parallèles.

**13.** Machine d'acquisition d'images (1) selon l'une des revendications 8 à 12, dans laquelle il est prévu un miroir (70) et dans laquelle le capteur d'images (30) et le support (10) sont montés mobiles l'un par rapport à l'autre, entre une première position dans laquelle le support (10) se trouve dans le champ du capteur d'images (30) et une seconde position dans laquelle le miroir (70) se trouve dans le champ du capteur d'images (30).


**Patentansprüche**

**1.** Verfahren zur Bestimmung eines Kantenbearbeitungs-Sollwerts einer optischen Linse, deren Kanten für ihre Montage in ein Brillengestell (150) zu bearbeiten sind, in das mindestens eine optische Bezugslinse (100) montiert ist, das die folgenden Schritte enthält:

a) Ausbau der optischen Bezugslinse (100) und Befestigung der optischen Bezugslinse (100) auf einem Träger (10) einer Bilderfassungsmaschine (1),
b) Erfassung, durch einen ein entozentrisches Objektiv aufweisenden Bildsensor (30) der Bilderfassungsmaschine (1), von mindestens zwei Bildern der optischen Bezugslinse (100), gesehen unter zwei unterschiedlichen Winkeln,
c) Verarbeitung der mindestens zwei Bilder, um daraus Kantenbearbeitungsparameter der optischen Linse abzuleiten, deren Kanten zu bearbeiten sind, und
d) Erarbeitung des Kantenbearbeitungs-Sollwerts abhängig von den Kantenbearbeitungsparametern,

wobei im Schritt c) die Krümmung einer der Seiten der optischen Bezugslinse (100) erfasst wird, und jedes erfasste Bild abhängig von der Krümmung skaliert wird.

**2.** Bestimmungsverfahren nach Anspruch 1, wobei im Schritt b) die mindestens zwei Bilder nacheinander erfasst werden, wobei ein Spiegel (70) auf dem optischen Pfad des Bildsensors (30) zwischen den zwei Bilderfassungen platziert ist.

**3.** Bestimmungsverfahren nach einem der Ansprüche 1 und 2, wobei im Schritt b) die mindestens zwei Bilder nacheinander erfasst werden, indem die optische Bezugslinse (100) zwischen den zwei Bilderfassungen bezüglich des Bildsensors (30) um einen bekannten Winkel um eine Drehachse geneigt wird, die durch die Kastenmitte der optischen Bezugslinse (100) verläuft.

**4.** Bestimmungsverfahren nach einem der Ansprüche 1 bis 3, wobei im Schritt b) ebenfalls mindestens ein Bild der in das Brillengestell (150) montierten optischen Bezugslinse (100) erfasst wird, und im Schritt c) das Bild verarbeitet wird, um daraus mindestens einen der Kantenbearbeitungsparameter abzuleiten.

**5.** Bestimmungsverfahren nach einem der Ansprüche 1 bis 4, wobei im Schritt b) eines der zwei Bilder der optischen Bezugslinse (100) von der Seite erfasst wird, so dass die optische Bezugslinse (100) sich in einer Mittelebene im Wesentlichen parallel zu einer Achse des optischen Pfads des Bildsensors (30) erstreckt, und im Schritt c) der Krümmungsradius einer der optischen Seiten der optischen Bezugslinse (100) bestimmt wird.

**6.** Bestimmungsverfahren nach einem der Ansprüche 1 bis 5, wobei im Schritt b) eines der zwei Bilder der optischen Bezugslinse (100) von vorne erfasst wird, so dass die optische Bezugslinse sich in einer Mittelebene im Wesentlichen orthogonal zu einer Achse des optischen Pfads des Bildsensors (30) erstreckt, und im Schritt c) auf dem erfassten Vorderansichtsbild die zweidimensionale Form des Umrisses (101) der optischen Bezugslinse (100) festgestellt wird.

**7.** Bestimmungsverfahren nach einem der Ansprüche 1 bis 6, wobei im Schritt c):

- jedes Bohrloch der optischen Bezugslinse (100) gesucht wird,
- für jedes gefundene Bohrloch das Bild ausgewählt wird, auf dem die Umrisse der vorderen und hinteren Ausmündungen des Bohrlochs die nächstliegenden sind, und
- mindestens ein Kantenbearbeitungsparameter der Charakterisierung der Form und der Position des Bohrlochs auf dem ausgewählten Bild zugewiesen wird.

**8.** Maschine zur Erfassung von Bildern (1) optischer Linsen, die aufweist:

- einen Träger (10) für eine optische Bezugslinse (100),

- eine Lichtquelle (20),
- einen Bildsensor (30), der ein entozentrisches Objektiv aufweist und geeignet ist, ein erstes Bild der vom Träger (10) getragenen optischen Bezugslinse (100) unter einem ersten Winkel gesehen und ein zweites Bild der vom Träger (10) getragenen optischen Bezugslinse (100) unter einem zweiten Winkel anders als der erste Winkel gesehen aufzunehmen,

**dadurch gekennzeichnet, dass** sie einen Rechner aufweist, der eine Verarbeitungssoftware speichert, die geeignet ist, die Schritte c) und d) eines Bestimmungsverfahrens gemäß einem der vorhergehenden Ansprüche durchzuführen.

9. Bilderfassungsmaschine (1) nach Anspruch 8, wobei der Bildsensor (30) und die Lichtquelle (20) zu beiden Seiten der vom Träger (10) getragenen optischen Bezugslinse (100) angeordnet sind.

10. Bilderfassungsmaschine (1) nach Anspruch 8, wobei der Bildsensor (30) und die Lichtquelle (20) auf der gleichen Seite der vom Träger (10) getragenen optischen Bezugslinse (100) angeordnet sind.

11. Bilderfassungsmaschine (1) nach einem der Ansprüche 8 bis 10, wobei der Träger (10) einen Sockel (11) und einen Satz von mindestens zwei Blockieraufsätzen (40, 50, 60) enthält, wobei jeder Blockieraufsatz (40, 50, 60) aufweist:

    - einen Greifteil (41, 51, 61) für seine Befestigung am Sockel (11) gemäß einer ersten Achse (A1), und
    - einen Aufnahmeteil (42, 52, 62) für seine Befestigung an der optischen Bezugslinse (100) gemäß einer zweiten Achse (A2), wobei der Neigungswinkel zwischen der ersten Achse (A1) und der zweiten Achse (A2) von einem Blockieraufsatz (40, 50, 60) zum anderen variiert.

12. Bilderfassungsmaschine (1) nach einem der Ansprüche 8 bis 10, wobei ein Gestell (2) vorgesehen ist, und wobei der Träger (10) einen Blockieraufsatz (40) zur Befestigung der optischen Bezugslinse (100) aufweist, der bezüglich des Gestells (2) mit mindestens zwei Drehbeweglichkeiten um zwei nicht parallele Achsen (A6, A7) beweglich montiert ist.

13. Bilderfassungsmaschine (1) nach einem der Ansprüche 8 bis 12, wobei ein Spiegel (70) vorgesehen ist, und wobei der Bildsensor (30) und der Träger (10) zwischen mindestens einer ersten Position, in der der Träger (10) sich im Feld des Bildsensors (30) befindet, und einer zweiten Position zueinander beweglich montiert sind, in der der Spiegel (70) sich im Feld des Bildsensors (30) befindet.

## Claims

1. Method of determining a guideline for trimming an optical lens to be trimmed with a view to its mounting in a spectacle frame (150) in which is mounted at least one reference optical lens (100), comprising steps:

    a) of removing the said reference optical lens (100) and of fixing the said reference optical lens (100) on a support (10) of a machine for acquiring images (1),
    b) of acquiring, with an image sensor (30) of the said machine for acquiring images (1) that comprises an entocentric objective, at least two images of the said reference optical lens (100) viewed from two different angles,
    c) of processing the said at least two images so as to deduce therefrom trimming parameters for the said optical lens to be trimmed, and
    d) of devising the said trimming guideline as a function of the said trimming parameters,

    wherein, in step c), the curvature of one of the faces of the said reference optical lens (100) is acquired, and each image acquired is scaled as a function of the said curvature.

2. Method of determining according to claim 1, in which, in step b), the said at least two images are acquired successively, a mirror (70) being placed in the optical path of the image sensor (30) between the two image acquisitions.

3. Method of determining according to one of Claims 1 and 2, in which, in step b), the said at least two images are acquired successively, while inclining, between the two image acquisitions, the said reference optical lens (100) with respect to the image sensor (30) by a known angle about an axis of rotation which passes through the boxing centre of the reference optical lens (100).

4.  Method of determining according to one of Claims 1 to 3, in which, in step b), at least one image of the reference optical lens (100) mounted in the spectacle frame (150) is also acquired, and in step c), the said image is processed so as to deduce therefrom at least one of the said trimming parameters.

5.  Method of determining according to one of Claims 1 to 4, in which, in step b), one of the two images of the reference optical lens (100) is acquired sideon, in such a way that the reference optical lens (100) extends in a mid-plane substantially parallel to an axis of the optical path of the said image sensor (30) and, in step c), the radius of curvature of one of the optical faces of the reference optical lens (100) is determined.

6.  Method of determining according to one of Claims 1 to 5, in which, in step b), one of the two images of the reference optical lens (100) is acquired face-on, in such a way that the reference optical lens extends in a mid-plane substantially orthogonal to an axis of the optical path of the said image sensor (30) and, in step c), the two-dimensional shape of the outline (101) of the reference optical lens (100) is read off on the image acquired face-on.

7.  Method of determining according to one of Claims 1 to 6, in which, in step c):

    - a search is conducted for each drill hole of the reference optical lens (100),
    - for each drill hole found, the image is selected on which the outlines of the front and rear openings of the said drill hole are the closest, and
    - at least one trimming parameter is assigned to the characterization of the shape and of the position of the said drill hole on the selected image.

8.  Machine for acquiring images (1) of optical lenses, comprising:

    - a support (10) for a reference optical lens (100),
    - a light source (20),
    - an image sensor (30) comprising an entocentric objective and that is suitable for capturing a first image of the reference optical lens (100) carried by the support (10), viewed from a first angle, and a second image of the reference optical lens (100) carried by the support (10), viewed from a second angle distinct from the first angle

    **characterized in that** it comprises a processing unit that memorizes a processing software suitable to operate steps c) and d) of a method according to one of the preceding claims.

9.  Machine for acquiring images (1) according to Claim 8, in which the said image sensor (30) and the said light source (20) are disposed on either side of the reference optical lens (100) carried by the support (10).

10. Machine for acquiring images (1) according to Claim 8, in which the said image sensor (30) and the said light source (20) are disposed on one and the same side of the reference optical lens (100) carried by the support (10).

11. Machine for acquiring images (1) according to one of Claims 8 to 10, in which the said support (10) comprises a stand (11) and a set of at least two locking caps (40, 50, 60), each locking cap (40, 50, 60) comprising:

    - a gripping part (41, 51, 61) for its fixing onto the said stand (11) according to a first axis (A1), and
    - an accommodating part (42, 52, 62) for its fixing to the said reference optical lens (100) according to a second axis (A2), the angle of inclination between the first axis (A1) and the second axis (A2) varying from one locking cap (40, 50, 60) to the other.

12. Machine for acquiring images (1) according to one of Claims 8 to 10, in which there is provided a chassis (2) and in which the support (10) comprises a locking cap (40) for the fixing of the said reference optical lens (100), which is mounted mobile with respect to the chassis (2) with at least two mobilities of rotation about two non-parallel axes (A6, A7).

13. Machine for acquiring images (1) according to one of Claims 8 to 12, in which there is provided a mirror (70) and in which the image sensor (30) and the support (10) are mounted mobile with respect to one another, between a first position in which the support (10) is situated in the field of the image sensor (30) and a second position in which the mirror (70) is situated in the field of the image sensor (30).

**Fig.1**

**Fig.3**

**Fig.2**

A1

30

70

A6 A3

10

40 12

11

14

**Fig.4**

13

2

30

P

**Fig.5**

$S_{21}$

100

$S_0$

101 100 110

$0 \, | \, X_{21}$

$Y_{Z1}$

P

100A

L1

P 100

P 100

$Z_{Z2}$

$S_{Z2}$ $S_L$

$0 \, | \, X_{22}$

L2

70

100B

**Fig.6**

109

100A

100

101

**Fig.7**

105

**Fig.8**

100

3

4

150

100

9

10

150

1

2

7

100

8

100

150

100

100

100

150

100

5

6

100

150

100

150

100

**EP 3 172 011 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0819967 A
- EP 1037008 A
- WO 9629177 A
- WO 2008093332 A
- US 7643899 B